Europäisches Patentamt

European Patent Office

Office européen des brevets

(11) Publication number: **0 091 717**
**B1**

(12) EUROPEAN PATENT SPECIFICATION

(45) Date of publication of patent specification: **20.11.86**

(21) Application number: **83200487.3**

(22) Date of filing: **07.04.83**

(51) Int. Cl.⁴: **G 02 B 6/44, H 01 B 13/00**

(54) **Method of manufacturing an elongate article.**

(30) Priority: **08.04.82 NL 8201501**
**01.09.82 NL 8203412**

(43) Date of publication of application:
**19.10.83 Bulletin 83/42**

(45) Publication of the grant of the patent:
**20.11.86 Bulletin 86/47**

(84) Designated Contracting States:
**AT BE CH DE FR GB IT LI LU NL SE**

(56) References cited:
**DE-A-3 000 109**
**FR-A-1 602 539**
**US-A-4 092 769**
**US-A-4 248 035**

(73) Proprietor: **N.V. Philips' Gloeilampenfabrieken**
**Groenewoudseweg 1**
**NL-5621 BA Eindhoven (NL)**

(72) Inventor: **Van der Maaden, Johan**
**c/o INT.OCTROOIBUREAU B.V. Prof. Holstlaan 6**
**NL-5656 AA Eindhoven (NL)**

(74) Representative: **Weening, Cornelis et al**
**INTERNATIONAAL OCTROOIBUREAU B.V. Prof.**
**Holstlaan 6**
**NL-5656 AA Eindhoven (NL)**

## Description

The invention relates to a method of manufacturing an elongate article comprising an elongate carrier member which has one or more channels or bores extending in the longitudinal direction of the carrier member, one or more channels or bores containing one or more elongate elements which extend along the channel or bore, the diameter or cross sectional area of the channel or bore being larger than that of the element.

An elongate article, carrier member or element is to be understood herein to be a product whose longitudinal dimension is much larger than its transverse dimensions or its diametrical dimension, as the case may be. The ratio length-diameter is at least 500 and will as a rule be 50,000 or more.

Such articles of large longitudinal dimensions can be manufactured by, for example, extruding a carrier member in the form of a separate tube around the elongate element. The element passes in a usual manner through a central aperture of a nozzle with which the separate tube is extruded around the element.

This known process has disadvantages if the element is of a fragile character, because damage is apt to occur. Moreover, technologically, the process is less suitable or cannot be used for the manufacture of more complicated articles in which the article comprises many elements which are situated closely together but are separated from each other.

The invention provides a method which can be used universally, is particularly suitable for handling vulnerable elements and/or for the manufacture of articles of a slightly more complicated construction than the above described single tube with an elongate element therein.

Particularly the invention relates to a new method of the type as mentioned in the opening paragraph. According to a first embodiment the method of the invention is characterized in that one or more elongate elements is or are inserted into an end of a channel or bore over a small distance and the carrier member or a part of the carrier member is subjected to a periodic pulsatory movement, in which the carrier member or said part thereof periodically returns to its initial position, the element(s) moving along the channel or bore as a result of the mass inertia of the element(s) and under the influence of said periodic pulsatory movement.

According to a second embodiment the method of the invention is characterized in that one or more elongate elements is or are inserted into an end of a channel or bore over a small distance and the carrier member or part of the carrier member is subjected to a harmonic vibration, the direction of vibration extending obliquely of the longitudinal direction of the carrier member, the element(s) moving along the channel or bore as a result of the mass inertia of the element(s) and under the influence of said harmonic vibration.

In a favourable embodiment both the carrier member and the element(s) are flexible. This offers technological advantages because the carrier member can be coiled and as a result of this can be subjected in a simple manner to the periodic movement.

The method according to the invention is particularly suitable for the manufacture of cables or cable elements. This applied even more so to the manufacture of optical cables or cable elements, in which the above-mentioned elongate element is an optical fibre.

In a favourable embodiment of the method in accordance with the invention an electrical and/or optical cable or cable element is manufactured, whereby one or more electrical and/or optical conductors is or are inserted over a small distance into an end of a channel or bore of the carrier member.

Due to the great importance of the method in accordance with the invention for the manufacture of optical cables or cable elements, the following discussion is directed mainly to the manufacture of optical cables and cable elements. It is emphasized that the method is not restricted thereto. First, the prior art in the field of the manufacture of optical cables and cable elements will be discussed.

The manufacture of an optical cable or cable element presents the problem that an extreme fragile optical fibre has to be handled which is vulnerable both optically and mechanically. The optical fibre is normally a glass fibre which is coated with a thin primary coating which is to ·protect the surface from damage. The fibre may also be a fibre of synthetic resin. The optical fibre, excluding the primary coating, has a diameter of approximately 125 µm and is very prone to fracture. Under the influence of mechanical stress the quality of the optical fibre can deteriorate considerably, especially in the presence of moisture (stress corrosion).

In addition to its sensitivity to thermal and mechanical loads the optical fibre has the disadvantage that its thermal expansion differs considerably from that of the material with which the fibre is usually enveloped for protection during the manufacture of an optical cable as well as in the manufacture of an electrical cable. During the manufacture of an optical cable, synthetic resins are frequently used, in particular thermoplastic synthetic resins the coefficient of expansion of which is many times that of the optical fibre. When subjected to temperature variations the synthetic-resin cladding of an optical fibre will exhibit a much greater variation in length than the optical fibre itself, which may give rise to an unacceptable deterioration in the optical and mechanical qualities of the fibre. As a first self-supporting envelope on the optical fibre a loose secondary coating is therefore often used within which the optical fibre has some freedom of movement.

In a known and frequently used embodiment the optical cable element comprises an optical fibre and a loose coating of synthetic resin provided around the fibre by an extrusion process. As a result of the fragile character of the optical fibre the extrusion process may be carried out very carefully and in particular stringent process parameters have to be observed. An additional disadvantage of the known process is that the high temperature of the extruded synthetic resin forms a thermal load for the optical fibre. In addition, during cooling and solidification of the extruded coating a considerable shrinkage will occur. Post-extrusion shrinkage of the extruded coating also often continues for a long period of time.

A number of the elementary cable elements thus produced may be twisted, for example, around a central strength member of metal or of a reinforced synthetic resin. The resulting elements may be provided with one or more protective coatings and/or be twisted to form larger elements or cables which in turn are provided with an outer sheath.

According to another known process of manufacturing a cable element, a synthetic resin-clad A1 foil is folded in a special manner such that in the longitudinal direction of the foil parallel open channels are formed having, for example, a trapezoidal cross-section. Optical fibres are laid in the channels and the foil is then covered with a second foil folded in the same manner so that closed channels having a regular hexagonal cross-section are formed. The second foil may be connected to the first foil by adhesive or may be fused to the first foil by means of a thermal treatment. If desired, several of the cable elements thus formed may be stacked one on top of the other, an optical cable thereby being formed which in cross-section has a honeycomb structure. The method is rather critical because the second foil must be accurately and carefully positioned and glued or otherwise bonded to the first foil. Moverover, the optical fibre must not be damaged.

In still another known process of manufacturing an optical cable element the starting material is a central core of synthetic resin which may be reinforced, for example with metal. Grooves which extend in the longitudinal direction of the core and mutually have a spiral shape or SZ shape are provided in the surface of the synthetic resin. Optical fibres are laid in the grooves and the surface of the grooved core is then covered with an extruded sheath of synthetic resin. In this process also a thermal load on the optical fibre and a considerable shrinkage of the synthetic sheath occur.

The above-mentioned known processes have in common the drawback that the formation of the cable from the first stage, so already when the first loose coating is provided, is carried out in the presence of the very vulnerable optical fibre. This presents serious problems, as stated by way of example in the preceding paragraph. Another serious disadvantage of the known processes is that it is very difficult or substantially impossible to obtain a defined overlength of the optical fibre within the carrier member. A defined overlength of the optical fibre is of great importance, for example, upon bending an optical cable or cable element and for a good thermomechanical behaviour. Since it is necessary to expose the optical fibre as little as possible to thermal and mechanical loads, the process choice and the choice of the enveloping or coating material are furthermore very much restricted.

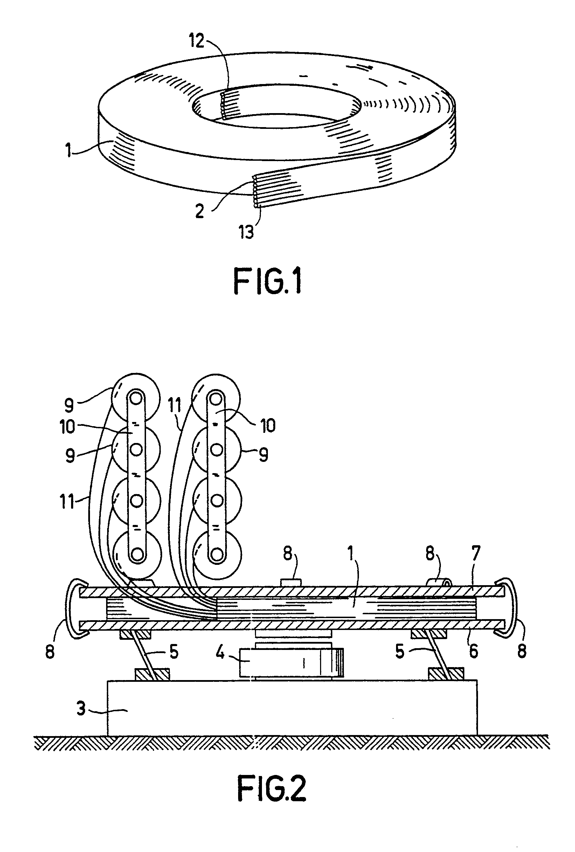

German Offenlegungsschrift 25 35 979 discloses an optical cable which comprises optical fibres or bundles of optical fibres within a protective sheath of metal. It appears from Figures 1 and 2 of the Offenlegungsschrift that the diameter of the protective sheath is very much larger than that of the optical fibres. Furthermore it is not clear in what manner the optical fibre shown in Figure 1, in which a seamless protective sheath of metal is used, must be manufactured.

German Offenlegungsschrift 30 00 109 discloses a process of manufacturing an optical cable in which one or more optical fibres are introduced into a capillary tube of metal by means of a flow of liquid. The process is inert with a rate of introduction of 5 metres per minute. The overall length of optical fibre which can be introduced is comparatively small. A length of 150 metres is mentioned on page 9. It is stated that larger lengths of optical fibre can be introduced in the case of very high liquid pressures. The high pressure is a serious disadvantage because expensive tubes of metal having large wall thicknesses have to be used. Moreover, the real danger exists that stress corrosion of the optical fibre occurs in the presence of moisture (water). Due to the necessary liquid flow the process is less suitable for practical applications. In this case also it holds that it is not possible to provide a defined overlength of optical fibre in the metal tube.

The above-described method according to the invention does not exhibit the aforesaid disadvantages.

By using the method in accordance with the invention, a readily defined overlength of optical fibre in the carrier member can be obtained.

The method according to the invention can be carried out at normal temperature and pressure. Flows of liquid are not used. There is no thermal load on the optical fibre(s). There is no compressive or tensile load on the fibre(s) as a result of shrinkage phenomena.

With the method according to the invention it is possible to manufacture in a first stage the whole cable with the exception of the conductors and to introduce the optical conductors into the relevant bores or channels of the cable as the final step.

The terms "cables" and "conductors" are to be understood herein to mean both optical and electrical cables and both optical and electrical conductors. The invention is mainly concerned with optical cables and optical conductors (fibres) however.

The method according to the invention also presents the possibility that carrier members of a variety of constructions and manufactured from materials of a variety of natures and compositions can be used in said method. The only condition is that the carrier member comprises channels which extend in the longitudinal direction and in which the conductors can be introduced. In choosing the construction and material of the carrier member the fragile character of the conductors, in particular the optical fibres, need not or hardly be taken into account — because they are inserted only afterwards — nor a pressure load on the carrier member during introducing the fibres. This in contrast with the pressure load which occurs upon introducing optical fibres by means of flows of liquid as described in the above-mentioned Offenlegungsschrift 30 00 109.

So as far as the carrier member is concerned, there is a great variety of materials which may be used, for example, organic materials, in particular synthetic resins or tensile fibre-reinforced synthetic resins and inorganic materials, in particular glass and metals.

As already stated, one or more elements such as conductors inserted into a bore or channel of the carrier member will move in the longitudinal direction of the carrier member as a result of the periodic movement of the carrier member in which said member periodically returns to its initial position. The term periodic movement to be understood as to include both a periodic pulsatory movement as a harmonic vibration. The mass inertia of the elements, c.q. conductors, plays an important role. Due to its mass inertia the elongate element cannot completely follow the periodic movement of the carrier member and will show a relative movement with respect to the carrier member and in the longitudinal direction of the carrier member. As a result of this the element, c.q. conductor, inserted into the end of a channel or bore will traverse the carrier member.

The harmonic vibration may be both linear and rotating. A pulsatory movement is obtained by giving the carrier member periodically a pulse ($mv$, where $m =$ mass and $v =$ velocity) in the longitudinal direction. The carrier member is returned to its initial position after each pulse. It may be compared with the movement of the head of a hammer along the handle by periodically giving the handle a pulse in the longitudinal direction, for example, by tapping the handle on the floor.

In a preferred embodiment the direction of vibration is inclined preferably at an angle of from 1 to 20°, in particular from 3 to 7°, to the longitudinal direction of the carrier member. In a further preferred embodiment the carrier member is subjected to a harmonic vibration which has a frequency of from 1 to 500 Herz and a horizontal amplitude component of from 0.1 to 10 mm.

The frequency is preferably from 10 to 150 Herz. The horizontal amplitude component is preferably from 0.5 to 4 mm.

The velocity of the element conductor along the channel or bore depends on various factors, for example, the type of periodic movement imparted to the carrier member, the mass inertia of the element, the friction between the element and the wall of the bore or channel, the ratio of the diameter of the channel or bore to that of the element, the angle which the direction of the periodic movement, for example a linear harmonic vibration, makes with the longitudinal direction of the carrier member and the frequency and amplitude of the periodic movement.

The velocity when the above-described harmonic vibration is used is favourable and is approximately from 10 to 40 metres per minute for an optical fibre. The distance covered may be very large, for example, from 200 to 2000 metres.

The diameter of the bore or channel may be very small. The ratio between the diameter of the channel or bore and the diameter of the element or conductor preferably has a value of from 2 to 1 to 8 to 1 and in particular a value from 2 to 1 to 6 to 1. The diameter of an optical fibre is that of the fibre and the primary coating thereon. As a rule the diameter of the fibre with primary coating is 250 μm. The diameter of the bore or the channel then is from 0.5 to 2 mm and in particular from 0.5 to 1.5 mm.

The friction between the element and the wall of the channel or bore is preferably small so that a "stick-slip" of the element is avoided. In this connection it is to be noted that in the case of an optical fibre the primary coating is preferably a hard coating manufactured from a radiation-polymerized lacquer, for example, a lacquer based on acrylates.

The method in accordance with the invention can be carried out by unskilled personnel. The apparatus required for performing the process is cheap and of little vulnerability.

In a favourable embodiment of the method in accordance with the invention the carrier member is detachably connected to a vibrating or shaking device.

A suitable vibrating or shaking device is, for example, a vibratory hopper of the kind used in industry to supply usually small articles such as electrical components to a processing or packaging machine in regular succession, for example, in the form of a row of "head-to-tail" components.

In a further favourable embodiment the carrier member is wound on or around a supporting member connected to the vibrating or shaking device, the periodic movement being imparted to the carrier member via the supporting member.

Examples of a supporting member are a supporting plate, a supporting post or a cylindrical member, for example, a reel.

A carrier member comprising one or more tubes is preferably used in the method in accordance with the invention, one or more conductors being inserted into an end of a tube.

In the simplest embodiment the carrier member comprises a single tube manufactured, for example, from a plastics or cross-linked synthetic resin, for example, a tube made of polyethene, polypropene, polyvinyl chloride, polyvinylidene fluoride, polycarbonate, polysulphone, polymethyl metacrylate or polytetrafluoro ethylene. One or more conductors are introduced into the finished tube under the influence of the periodic movement and thus a cable element is obtained.

During the manufacture of the element no thermal load on the conductor(s), in particular on the optical fibre(s), occurs. The applied tube is a chemically stable product with a temperature which corresponds to that of the atmosphere. There is no shrinkage of the tube during its manufacture. If desired, the possibility of shrinkage occurring after manufacture can be prevented by subjecting the tube to an ageing process prior to the manufacture of the element.

In a favourable embodiment a tube is used having a length of at least 200 metres and having an inside diameter which is from 2 to 8 times the diameter of the conductor.

In the case of an optical fibre, such a tube serves as a loose self-supporting secondary coating.

In a further favourable embodiment the tube is manufactured from an inorganic material or from a synthetic resin comprising tensile fibres.

A suitable inorganic material is glass or a metal.

A secondary coating of metal can be manufactured, for example, by means of a drawing process in which with the use of a die, a metal tube of a large diameter is reshaped into a tube having a small diameter with a simultaneous increase in length. The metal coating may alternatively be made by an extrusion process in which generally a high extrusion temperature is used. The melting-points of metal or glass are considerably higher than those of plastic synthetic resins. The high temperatue is of no consequence whatsoever because during the manufacture of the secondary coating no conductor, in particular no optical fibre, is present. The secondary coating can also be manufactured from a metal tape by folding it longitudinally or winding it transversely, preferably with overlap, and sealing the seams, for example, by a welded or soldered joint or by using an adhesive. When an adhesive is used the overlapping parts of the coating must be subjected to quite some pressure. This is no problem because, as already explained, no conductor, in particular no optical fibre, is present. The same applies to the thermal energy released upon welding or soldering. If desired the secondary coating of metal or of glass may be provided on the inside and/or on the outside with a layer of synthetic resin, for example, an extruded inner coating and/or outer coating. An inner coating may very readily serve as a substratum upon folding or winding the metal tape and upon making a glued joint. Roughness, if any, of the metal coating is also masked by a layer of synthetic resin.

A secondary coating (tube) of metal or glass has an excellent tensile strength and an excellent watertightness. Moreover, the very important advantage is obtained that the coefficient of expansion is more compatible with that of an optical fibre. A secondary coating of glass even has the same coefficient of expansion. Suitable metals are, for example, Al, Cu and Steel. Another example of a secondary coating having a good tensile strength is a coating manufactured from a synthetic resin comprising tensile fibres, for example, glass fibres, carbon fibres or polyamide fibres, or a coating manufactured from a special tensile synthetic resin, for example, polyarylethers.

The carrier member used in the method according to the invention may also comprise a strength member and one or more hollow tubes which extend parallel to the strength member or are provided on or around the strength member in a spiral form or SZ form, a conductor and notably an optical fibre being inserted into the end of a hollow tube and the carrier member being subjected to a periodic movement.

According to this embodiment the conductors and notably the optical fibres are inserted at a later stage into the hollow tube (secondary coating), namely, after the hollow tubes have been combined together with a die.

This also applies to another embodiment of the method in accordance with the invention in which a carrier member is used which comprises a core provided with one or more grooves in its surface which are covered with one or more protective layers and which extend parallel to the axis of the core or have a spiral form or SZ form, a conductor and in particular an optical fibre being inserted into an end of a groove and the carrier member being subjected to a periodic movement.

An SZ form is a known and interesting configuration of an optical fibre. It is a spiral form having alternate left-hand and right-hand pitch. The protective layers are, for example, extruded layers of synthetic resin and/or wound foils. Since the grooves are covered with one or more protective layers, closed channels or bores are formed extending in the longitudinal direction of the carrier member. The optical fibre(s) is (are) inserted into the channels or bores.

In another favourable embodiment of the method in accordance with the invention an elongate body of synthetic resin is used as a carrier member, which body comprises one or more channels extending in the longitudinal direction of the body and is obtained by an extrusion process in which after extrusion the synthetic resin body is drawn down.

The process in which a body of synthetic resin after extrusion is drawn down is termed a draw down process or spinning process. The body of synthetic resin is subjected to such a pulling force that a considerable increase in length occurs with a simultaneous decrease of the cross-sectional area of the body. Upon drawing down a tubular body of synthetic resin the length becomes many times larger while the diameter and the wall thickness of the tube decrease. Elongate articles of synthetic resin can be manufactured by means of a draw down process at a large production speed and at low cost. A draw down process is suitable in particular to manufacture elongate articles of synthetic resin of a large length, for example, in a length of several kilometers, the article also comprising channels which extend in the longtudinal direction and have small diametrical dimensions, for example, a diameter of 0.4 to 1.5 mm.

A cable element or cable and in particular an optical cable element or cable having a carrier member of a drawn down synthetic resin manufactured by the method of the invention is a novel product. Such a cable or cable element cannot be manufactured according to the conventional methods.

In a favourable embodiment of the method in accordance with the invention a ribbon-like body of drawn down synthetic resin is used as a carrier member which comprises several juxtaposed and parallel channels.

The resulting ribbon-like cable element is very suitable to be further processed, if so desired, to form a larger optical cable. For example, several ribbon-like elements may be stacked and the resulting packet may be enveloped by a tube of synthetic resin which may be reinforced, for example, by means of steel litzwires or glass fibres. One or more ribbon-like elements may also be wound around a central core which consists, for example, of a steel litzwire enveloped by synthetic resin and an outer coating of synthetic resin may then be provided by extrusion.

Not all channels or bores of the elongate carrier member need be provided with one or more optical fibres. In accordance with the wishes and needs of the customer some of the available channels or bores may be provided with conductors, in particular optical fibres. This offers a great flexibility. The process technical and economical advantage also obtained that a standardized supporting member can be used, such as a ribbon-like product of synthetic resin of, for example, 1000 metres length and having 100 channels. A number of the 100 channels is provided at will with conductors.

In still another preferred embodiment of the method in accordance with the invention one or more auxiliary wires are inserted into one or more of the remaining bores or channels, that is to say the bores or channels which contain no conductors or are not occupied entirely by conductors. The introduction of the auxiliary wires is carried out in the same manner as that of the optical fibres, i.e., under the influence of the periodic movement of the carrier member and as a result of the mass inertia of the auxiliary wires. Examples of interesting auxiliary wires are identification (marker) wires, for example, coloured glass fibres. If the mass inertia of the auxiliary wires is insufficient, for example, when textile auxiliary wires are used, the wire may be provided at one end with an element which increases the mass inertia, for example, a blunt needle. The same measure may also be used, if desired, in the insertion of the conductors, for example, optical fibres.

As already stated, the method of the invention presents the advantage that a defined overlength of optical fibre can be provided in a simple manner. For this purpose, after the optical fibre has been inserted over the full length of a channel or bore and the output end of the channel or bore has been closed or otherwise blocked, the periodic movement may be continued for some time until no further input of the fibre into the channel or bore takes place. The overlength is then at a maximum. The input end of the channel or bore is then blocked and the output end is opened. The periodic movement is performed again until the entire overlength of fibre projects from the output end. The maximum overlength is thereby known and the desired overlength can very accurately be introduced by blocking the output end.

Another advantage of the method in accordance with the invention is that if an optical fibre which has been inserted into a channel or bore is, for example, damaged or even broken, it can easily be removed by causing it to move out of the bore or channel under the influence of a periodic movement imparted to the carrier member. The bore or the channel must be left open at at least one end.

The invention will be described in greater detail with reference to the drawings in which,

Figure 1 is a perspective view of a ribbon-like carrier member,

Figure 2 is a sectional view of a vibrating device for carrying out the method according to the invention,

Figure 3 is an elevation, partly in section, of another embodiment of a device for carrying out the method in accordance with the invention,

Figure 4 is a perspective view of an optical cable according to the invention,

Figure 5 is a perspective view of another embodiment of an optical cable in accordance with the invention.

In Figure 1 reference numeral 1 denotes a ribbon-like carrier member of reinforced polysulphone. Ribbon 1 has a width of 7.3 mm, a thickness of 1 mm and a length of 1000 metres. Ribbon 1 comprises eight channels 2 which extend parallel to one another in the longitudinal direction of the ribbon and which have a circular or a rectangular cross-section of $0.8 \times 0.8$ mm.

Reference numeral 3 in Figure 2 denotes a supporting member which has an electromagnet 4 and two leaf springs 5. Electromagnet 4 and leaf springs 5 are connected to a horizontal vibrating table 6 at their ends remote from the supporting member 3. The spring angle $\beta$ which the leaf springs 5 make with the vertical at the vibrating table 6 is 5.

The coiled carrier member 1 shown in Figure 1 is mounted on vibrating table 6 which has a diameter of approximately 1.5 metres. Carrier member 1 is held firmly on vibrating table 6 by means of a clamping plate 7 and clamping braces 8 which engage over the edges of clamping plate 7 and vibrating table 6. Eight reels 9 are supported above clamping plate 7 in holders 10. Reels 9 each carry an optical fibre 11 having a length of 11 kilometre.

The optical fibre has a diameter of 125 μm and comprises a primary coating of a UV-light-cured lacquer. The overall diameter of the fibre with the coating is 250 μm. The operation of the device is as follows. The end of each fibre is inserted over a small distance of, for example, 50 cm into a channel 2 of carrier member 1. By energizing the electromagnet a harmonic vibration is imparted to vibrating table 6 and the carrier member 1 clamped thereon, the direction of vibration being substantially at right angles to the leaf springs 5. The frequency is 100 Herz. The horizontal amplitude of the vibration from peak to peak is approximately 1.6 mm. As a result of the vibrating movement performed by the carrier member 1 and under the influence of their mass inertia, the optical fibres 11 advance along the respective channels 2. The rate of advance is 25 metres/min. After the fibres have advanced the full length of the carrier member the channels 2 at the output end 12 of carrier member 1 are blocked. The vibration is continued until no further movement of fibres 11 into channels 2 takes place. In this situation the overlength of an optical fibre 11 in a channel 2 is at a maximum. The fibre then lies wholly against the outer wall of the spiralling channels 2 in the coiled carrier member 1. The input end 13 of carrier member 1 is now blocked while the output end 12 is released. The carrier member is again subjected to the vibrating movement. As a result of this the ends of the optical fibres 11 move out of the output end 12 of carrier member 1. The vibrating movement is continued until no further movement of fibres 11 takes place. The length of the fibres in the carrier member is now at a minimum. The fibres lie against the inner walls of the spiralling channels 2. The distance over which the fibres project from the output end 12 of carrier member 1 is measured. This length is a measure of the maximum overlength of fibres 11 in member 1. The output end 12 of the carrier member 1 is now blocked and the input end is released. The carrier member 1 is subjected to the vibratory movement in which any desired overlength of optical fibres is introduced into the carrier member 1. In a manner similar to that described above, electrical conductors, for example, copper wires, may be introduced into ribbon 1 instead of optical fibres, so that an electrical ribbon cable is obtained. An electrical ribbon cable according to the invention has significant advantages when compared with a known embodiment of an electrical ribbon cable. The known electrical ribbon cable is manufactured by extruding a hollow tube of synthetic resin around the electrical conductors, which are arranged parallel to one another in a flat plane, pressing the wall of the tube against the conductors by evacuating the tube, and firmly pressing the portions of the wall parts of the tube of synthetic resin which lie between the conductors against each other by means of a roller. Some of the said advantages are better stripability, greater flexibility, and a more accurately defined insulating capacity and the possibility of using in a simple manner electrical conductors of different diameters in the channels 2.

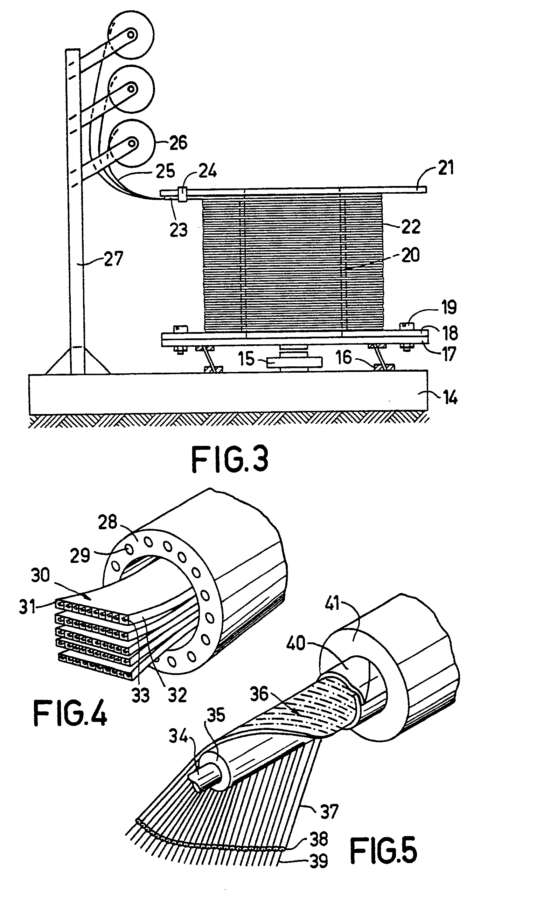

Reference numeral 14 in Figure 3 denotes a supporting member which has an electromagnet 15 and two leaf springs 16 which are connected to a horizontal vibrating plate 17 at their ends remote from the supporting member 14. The spring angle β of the leaf springs, *i.e.* the angle between the leaf spring and the vertical at the vibrating plate, is 3°.

A reel 18 is connected to vibrating plate 17 by means of bolts 19. The cylindrical core 20 of reel 18 has a diameter of 20 cm and an axial length of 25 cm. The diameter of the circular flanges 21 of the reel is 30 cm. A carrier member in the form of a tube 22 manufactured from polyvinylidene fluoride is wound on reel 18. The outside diameter of tube 22 is 1.5 mm; the inside diameter is 1 mm. Tube 22 has a length of approximately 1080 metres. The number of layers of turns of the tube 22 on the core 20 is 10.

The end 23 of tube 22 is connected to the reel flange 21 remote from the vibrating plate 17 by means of a clamp 24. Three optical fibres 25 are inserted into the tube end 23. The length of the portions of the optical fibres which are inserted into the tube end 23 is approximately 20 to 30 cm. Each optical fibre has an overall length of approximately 1080—1090 metres and is wound on a supply reel 26. Supply reels 26 are connected to holder 27.

By energising the electromagnet 15 a harmonic vibration is imparted to vibrating plate 17 and thence to reel 18 and carrier member 22. The vibration has a frequency of 50 Herz and horizontal peak-to-peak amplitude of 4.0 mm. Under the influence of the vibration imparted to the carrier member 22 and as a result of the mass inertia of optical fibres 25, fibres 25 advance along the carrier member (tube) 22. The rate of advance is approximately 20 metres per minute. After approximately 50 minutes tube 22 is occupied over its overall length by three optical fibres 25. In a manner similar to that described with reference to Figure 2 an overlength of optical fibres 25 in tube 22 can be provided.

Tube 22 may be manufactured from a synthetic resin, for example as described above, but may alternatively be made from an inorganic material, for example, a metal tube, in particular a copper tube, or a glass tube. Advantages of these inorganic materials are a good tensile strength and watertightness.

Reference numeral 28 in Figure 4 denotes a cylindrical sheath made of a synthetic resin, for example, polythene, and having reinforcing elements 29 which extend in the longitudinal direction of the sheath and are embedded in the synthetic resin and which consist of, for example, twisted steel wires. Five optical cable elements 30 extend inside the sheath 28. Each cable element comprises a carrier member 32 manufactured from a drawn down synthetic resin and having ten channels 31. An optical fibre 33 is contained in each of the channels.

Reference numeral 34 in Figure 5 denotes a steel core. The core has a coating 35 of a synthetic resin, for example polyethene. An optical cable element 36 is wound around synthetic resin coating 35 and has a carrier member 37 which is made of a drawn down resin and which comprises twenty-five channels 38 extending in the longitudinal direction of the carrier member 37. The channels have an inside diameter of 1 mm and each comprise an optical fibre 39 having a primary coating of synthetic resin not shown. A foil 40 of, for example, polyester is wound around the carrier member and in turn is covered with a sheath 41 of polyethene synthetic resin.

**Claims**

1. A method of manufacturing an elongate article comprising an elongate carrier member which has one or more channels or bores extending in the longitudinal direction of the carrier member, one or more channels or bores containing one or more elongate elements which extend along the channel or bore, the diameter or cross sectional area of the channel or bore being larger than that of the element, characterized in that one or more elongate elements is or are inserted into an end of a channel or bore over a small distance and the carrier member or a part of the carrier member is subjected to a periodic pulsatory movement, in which the carrier member or said part thereof periodically returns to its initial position, the element(s) moving along the channel or bore as a result of the mass inertia of the element(s) and under the influence of said periodic pulsatory movement.

2. A method of manufacturing an elongate article comprising an elongate carrier member which has one or more channels or bores extending in the longitudinal direction of the carrier member, one or more channels or bores containing one or more elongate elements which extend along the channel or bore, the diameter or cross sectional area of the channel or bore being larger than that of the element, characterized in that one or more elongate elements is or are inserted into an end of a channel or bore over a small distance and the carrier member or part of the carrier member is subjected to a harmonic vibration, the direction of vibration extending obliquely of the longitudinal direction of the carrier member, the element(s) moving along the channel or bore as a result of the mass inertia of the element(s) and under the influence of said harmonic vibration.

3. A method as claimed in Claim 2, characterized in that the direction of vibration is inclined at an angle of from 1 to 20° to the longitudinal direction of the carrier member.

4. A method as claimed in Claim 2 or 3, characterized in that the harmonic vibration has a frequency of from 1 to 500 Herz and a horizontal amplitude component of from 0.1 to 10 mm.

5. A method as claimed in any of the Claims 1 to 4, characterized in that both the carrier member and the element(s) are flexible.

6. A method as claimed in Claim 5, for the manufacture of an electrical and/or optical cable or cable element, characterized in that one or more electrical and/or optical conductors is or are inserted into an end of a channel or bore of the carrier member.

7. A method as claimed in Claim 5 or 6, characterized in that the carrier member is detachably connected to a vibratory or shaking device.

8. A method as claimed in Claim 7, characterized in that the carrier member is wound on or around a supporting member connected to the vibrating or shaking device, the periodic movement being imparted to the carrier member *via* the supporting member.

9. A method as claimed in Claim 6, characterized in that the carrier member used comprises one or more tubes, one or more conductors being inserted into an end of a tube.

10. A method as claimed in Claim 9, characterized in that a tube is used having a length of at least 200 metres and an inside diameter which is from 2 to 8 times the diameter of the conductor.

11. A method as claimed in Claim 9, characterized in that the tube is manufactured from an inorganic material or from a synthetic resin having tensile fibres.

12. A method as claimed in Claim 6, characterized in that the carrier member used is an elongate body of synthetic resin which comprises one or more channels extending in the longitudinal direction of the body and which is obtained by an extrusion process in which after extrusion the body of synthetic resin is drawn down.

13. A method as claimed in Claim 12, characterized in that the carrier member used is a ribbon-like member of drawn down synthetic resin having several juxtaposed and parallel channels.

14. A method as claimed in Claim 6, characterized in that a carrier member having several channels or bores is used, some of the channels or bores being provided with one or more conductors and one or more auxiliary wires being inserted into the remaining channels or bores.

**Revendications**

1. Procédé pour la réalisation d'un objet allongé, comportant un organe de support allongé qui présente au moins un canal ou perforation(s) s'étendant dans la direction longitudinale de l'organe de support, au moins un canal ou perforation contenant un ou plusieurs éléments allongés, qui s'étendent dans le canal ou la perforation, dont le diamètre ou la section transversale est plus grand(e) que celui ou celle de l'élément, caractérisé en ce qu'un ou plusieurs éléments allongés est ou sont introduit(s) dans une extrémité d'un canal ou d'une perforation sur une petite distance et l'organe de support ou une partie de l'organe de support est soumis à un mouvement pulsatoire périodique pendant lequel l'organe de support ou ladite partie de ce dernier retourne périodiquement dans sa position initiale, l'élément ou les éléments se déplaçant dans le canal ou la perforation par suite de l'inertie de masse de l'élément ou des éléments et sous l'influence dudit mouvement pulsatoire périodique.

2. Procédé pour la réalisation d'un objet allongé, comportant un organe de support allongé, qui présente au moins un canal ou perforation s'étendant dans la direction longitudinale de l'organe de support, au moins un canal ou perforation contenant un ou plusieurs éléments allongés, qui s'étendent dans le canal ou la perforation, dont le diamètre ou la section transversale est plus grand(e) que celui ou celle de l'élément, caractérisé en ce qu'un ou plusieurs éléments allongé(s) est ou sont introduit(s) dans une extrémité d'un canal ou d'une perforation sur une petite distance et l'organe de support et la partie de l'organe de support est soumis à une vibration harmonique, la direction de la vibration s'étendant obliquement par rapport à la direction longitudinale de l'organe de support, l'élément ou les éléments se déplaçant par le canal ou la perforation par suite de l'inertie de masse de l'élément ou des éléments et sous l'influence de ladite vibration harmonique.

3. Procédé selon la revendication 2, caractérisé en ce que la direction de vibration est inclinée d'un angle de 1 à 20° par rapport à la direction longitudinale de l'organe de support.

4. Procédé selon la revendication 2 ou 3, caractérisé en ce que la vibration harmonique présente une fréquence de 1 à 500 Hz et une composante d'amplitude horizontale de 0,1 à 10 mm.

5. Procédé selon l'une des revendications 1 à 4, caractérisé en ce que tant l'organe de support que l'élément de support sont flexibles.

6. Procédé selon la revendication 5, pour la réalisation d'un câble ou élément de câble électrique et/ou optique, caractérisé en ce qu'un ou plusieurs conducteurs électriques et/ou optiques est ou sont inséré(s) dans une extrémité d'un canal ou d'une perforation de l'organe de support.

7. Procédé selon la revendication 5 ou 6, caractérisé en ce que l'organe de support est relié de façon détachable à un dispositif de vibration ou d'agitation.

8. Procédé selon la revendication 7, caractérisé en ce que l'organe de support est enroulé sur ou autour d'un organe porteur relié au dispositif d'agitation ou de vibration, le mouvement périodique étant communiqué à l'organe de support par l'intermédiaire d'un corps porteur.

9. Procédé selon la revendication 6, caractérisé en ce que l'organe de support utilisé comporte un ou plusieurs tubes, un ou plusieurs conducteurs étant insérés dans une extrémité d'un tube.

10. Procédé selon la revendication 9, caractérisé par l'utilisation d'un tube d'une longueur d'au moins 200 mètres et d'un diamètre interne qui est égal à 2 à 8 fois le diamètre du conducteur.

11. Procédé selon la revendication 9, caractérisé en ce que le tube est réalisé en un matériau inorganique ou une matière synthétique présentant des fibres de traction.

12. Procédé selon la revendication 6, caractérisé en ce que l'organe de support utilisé est un corps allongé en matière synthétique, qui comporte au moins un canal s'étendant dans la direction longitudinale du corps et qui est obtenu par un processus d'extrusion au cours duquel, après extrusion, le corps en matière synthétique est étiré.

13. Procédé selon la revendication 12, caractérisé en ce que l'organe de support utilisé est un corps en forme de ruban en matière synthétique étirée présentant plusieurs canaux parallèles et juxtaposés.

14. Procédé selon la revendication 6, caractérisé en ce que par l'utilisation d'un organe de support présentant plusieurs canaux ou perforations, plusieurs des canaux ou perforations étant munis d'un ou de plusieurs conducteur(s) et un ou plusieurs fil(s) auxiliaire(s) étant introduit(s) dans les canaux ou perforations qui restent.

**Patentansprüche**

1. Verfahren zum Herstellen eines gestreckten Körpers mit einem gestreckten Trägerelement, das mit einem oder mehreren Kanälen bzw. Bohrungen versehen ist, die sich in der Längsrichtung des Trägerelementes erstrecken, wobei ein oder mehrere Kanäle bzw. Bohrungen ein oder mehrere gestreckte Elemente aufweisen, die sich in der Längsrichtung des Kanals bzw. der Bohrung erstrecken und wobei der Durchmesser bzw. der Querschnitt des Kanals bzw. der Bohrung grösser ist als der des Elementes, dadurch gekennzeichnet, dass ein oder mehrere gestreckte Elemente über einen geringen Längenabschnitt in das Ende eines Kanals bzw. einer Bohrung gesteckt werden und das Trägerelement oder ein Teil des Trägerelementes einer impulsartigen periodischen Bewegung ausgesetzt wird, wobei das Trägerelement oder der genannte Teil periodisch in die Ausgangslage zurückkehrt und wobei das (die) Element(e) infolge der Massenträgheit desselben bzw. derselben und unter dem Einfluss der genannten impulsartigen periodischen Bewegung in Längsrichtung des Kanals bzw. der Bohrung bewegt werden.

2. Verfahren zum Herstellen eines getreckten Körpers mit einem gestreckten Trägerelement, das mit einem oder mehreren Kanälen bzw. Bohrungen versehen ist, die sich in der Längsrichtung des Trägerelementes erstrecken, wobei ein oder mehrere Kanäle bzw. Bohrungen mit einem oder mehreren gestreckten Elementen versehen sind, die sich innerhalb des Kanals bzw. der Bohrung erstrecken, wobei der Durchmesser bzw. die Querschnittsfläche des Kanals bzw. der Bohrung grösser ist als der bzw. die des Elementes, dadurch gekennzeichnet, dass ein oder mehrere gestreckte Elemente über einen geringen Längenabschnitt in ein Ende eines Kanals bzw. einer Bohrung eingeführt werden und dass das Trägerelement oder ein Teil des Trägerelementes einer harmonischen Schwingung ausgesetzt wird, wobei die Richtung der Schwingung sich schräg zu der Längsrichtung des Trägerelementes erstreckt, wobei durch die Massenträgheit des Elementes bzw. der Elemente und unter dem Einfluss der genannten harmonischen Schwingung das Element bzw. die Elemente sich durch den Kanal bzw. die Bohrung bewegen.

3. Verfahren nach Anspruch 2, dadurch gekennzeichnet, dass die Schwingungsrichtung einen Winkel von 1 bis 20° mit der Längsrichtung des Trägerelementes einschliesst.

4. Verfahren nach Anspruch 2 oder 3, dadurch gekennzeichnet, dass die harmonische Schwingung eine Frequenz von 1 bis 500 Hz und einen horizontalen Amplitudenteil von 0,1 bis 10 mm hat.

5. Verfahren nach einem der Ansprüche 1 bis 4, dadurch gekennzeichnet, dass das Trägerelement und das Element bzw. die Elemente biegsam sind.

6. Verfahren nach Anspruch 5, zum Herstellen eines elektrischen und/oder optischen Kabels bzw. Kabelelementes, dadurch gekennzeichnet, dass ein oder mehrere elektrische und/oder optische Leiter in ein Ende eines Kanals bzw. einer Bohrung des Trägerelementes eingeführt werden.

7. Verfahren nach Anspruch 5 oder 6, dadurch gekennzeichnet, dass das Trägerelement lösbar mit der Schwingungs- oder Rüttelvorrichtung verbunden ist.

8. Verfahren nach Anspruch 7, dadurch gekennzeichnet, dass das Trägerelement auf oder um ein Tragelement gewickelt ist, das auf der Schwingungs- oder Rüttelvorrichtung befestigt ist, wobei die periodische Bewegung dem Trägerelement über das Tragelement erteilt wird.

9. Verfahren nach Anspruch 6, dadurch gekennzeichnet, dass das Trägerelement eine oder mehrere Röhren aufweist, wobei ein oder mehrere Leiter in ein Ende einer Röhre eingeführt werden.

10. Verfahren nach Anspruch 9, dadurch gekennzeichnet, dass eine Röhre mit einer Länge von wenigstens 200 m und mit einem Innendurchmesser, der um das zwei- bis 8-fache grösser ist als der Durchmesser des Leiters, verwendet wird.

11. Verfahren nach Anspruch 9, dadurch gekennzeichnet, dass die Röhre aus einem anorganische Material oder aus einem Kunststoff mit Verstärkungsfasern hergestellt ist.

12. Verfahren nach Anspruch 6, dadurch gekennzeichnet, dass das Trägerelement ein gestreckter Körper aus Kunststoff ist, der einen oder mehrere Kanäle aufweist, die sich in der Längsrichtung des Körpers erstrecken und der in einem Extrusionsverfahren erhalten wird, in dem der Kunststoffkörper nach Extrusion verstreckt wird.

13. Verfahren nach Anspruch 12, dadurch gekennzeichnet, dass das Trägerelement ein bandförmiges Element aus verstrecktem Kunststoff ist mit mehreren sich nebeneinander und parallel zueinander erstreckenden Kanälen.

14. Verfahren nach Anspruch 6, dadurch gekennzeichnet, dass ein Trägerelement mit mehreren Kanälen oder Bohrungen verwendet wird, wobei einige der Kanäle bzw. Bohrungen mit einem oder mehreren Leitern und einem oder mehreren Hilfsdrähten versehen sind, die in die übrigen Kanäle bzw. Bohrungen eingeführt werden.

FIG.1

FIG.2

FIG.3

FIG.4

FIG.5